# EUROPEAN PATENT APPLICATION

(11) **EP 1 770 811 A2**
(43) Date of publication of application: **04.04.2007**
(21) Application number: 06020012.8
(22) Date of filing: 25.09.2006
(51) Int. Cl.: H01M 8/04, F16C 17/12, F01D 15/10, F02C 6/10, F02C 7/06, F02C 1/05

(54) **Fuel-cell apparatus with coupled compressor and turbine**

(30) Priority: 29.09.2005 JP 2005283351
(71) Applicant: JTEKT Corporation, Chuo-ku, Osaka-shi Osaka 542-8502 (JP)
(72) Inventor: Taniguchi, Manabu, Osaka-shi, Osaka 542-8502 (JP); Miyagawa, Yasukata, Osaka-shi, Osaka 542-8502 (JP); Ueyama, Hirochika, Osaka-shi, Osaka 542-8502 (JP)
(74) Representative: Steinmeister, Helmut

(57) **Abstract**

A fuel-cell compressed-air supplying device 6 includes a compressor 12 including an impeller 15 provided on one side of a rotation shaft 13 and a turbine 16 provided on the other side of the rotation shaft 13 of the compressor 12. Compressed air is supplied to a fuel-cell stack 2 through the rotation of the impeller 15, and exhaust air exhausted from the fuel-cell stack 2 causes the turbine 16 to rotate.

## Description

### BACKGROUND OF THE INVENTION

The present invention relates to a fuel-cell apparatus for creating energy from hydrogen and oxygen, and, in particular, to a fuel-cell apparatus capable suitably mounted to a vehicle.

Prototypes of fuel-cell vehicles which incorporate fuel-cells for running have been already fabricated, and Patent Literature 1 (JP-A No. 2002-70762) suggests a fuel-cell vehicle incorporating a scroll compressor as a device suitable for supplying compressed air to the fuel-cells in the fuel-cell vehicle.

In fuel-cell apparatuses, for use in fuel-cell vehicles, it has become a critical challenge to increase the efficiencies thereof, and there has also been a need for further increasing the efficiencies of the compressed-air supplying devices therein.

However, with the scroll compressor described in the aforementioned Patent Literature 1, the electricity generated from the fuel-cells is partially utilized for driving the compressed-air supplying device and, further, compressed air is discharged after being supplied to the fuel-cell stack without being efficiently utilized, which causes the problem of lower efficiency of the entire fuel-cell apparatus.

### SUMMARY OF THE INVENTION

It is an object of the present invention to provide a fuel-cell apparatus capable of efficiently utilizing compressed air after supplying it to a fuel-cell stack to improve the total efficiency.

A fuel-cell apparatus according to the present invention is a fuel-cell apparatus including a fuel-cell stack and a fuel-cell compressed-air supplying device for compressing air and supplying the compressed air to the fuel-cell stack, wherein the compressed-air supplying device includes a compressor including an impeller provided on one side of a rotation shaft and a turbine provided on the other side of the rotation shaft of the compressor, compressed air is supplied to the fuel-cell stack through the rotation of the impeller, and exhaust air exhausted from the fuel-cell stack causes the turbine to rotate.

The compressor is an electric turbo-type air compressor, wherein compressed air is supplied to the fuel-cell stack from the impeller of the compressor. Further, the exhaust air resulted from the reaction in the fuel-cell stack is supplied to the turbine and is used for rotating the rotation shaft of the compressor.

Preferably, in an exhaust air flow channel for supplying the air exhausted from the fuel-cell stack to the turbine, a flow-rate control valve is provided for controlling the flow rate of the exhaust air supplied to the turbine according to a rotation state. In this case, when the vehicle runs normally (during high-speed rotation of the rotation shaft), it is preferable that the valve is fully opened to cause the exhaust air to be discharged from an exhaust port in the turbine housing after rotating the turbine. In a power-saving state such as when the vehicle reducing the speed, the valve is partially or fully closed to cause a portion or all of the exhaust air to be discharged outside through midway of the exhaust air flow channel.

Preferably, a bearing device which supports the rotation shaft of the compressor includes a pair of radial foil bearings provided coaxially with the rotation shaft for supporting the rotation shaft in the radial direction, and a pair of axial foil bearings faced to the rotation shaft in the axial direction for supporting the rotation shaft in the axial direction.

The radial foil bearings include a flexible bearing foil having a bearing surface facing to the rotation shaft in the radial direction, an elastic member for supporting the bearing foil, and a bearing housing for holding the bearing foil and the elastic member between the bearing housing and the rotation shaft.

Further, the axial foil bearings include a flexible bearing foil having a bearing surface facing to the rotation shaft in the axial direction, an elastic member for supporting the bearing foil, and a bearing housing for holding the bearing foil and the elastic member between the bearing housing and the rotation shaft. The rotation shaft is provided with a flange portion which functions as a thrust plate, and the pair of axial foil bearings are faced to each other with the flange portion interposed therebetween.

With the aforementioned foil bearings, during the rotation of the rotation shaft, ambient air is drawn into the gaps between the bearing foils and the rotation shaft to generate pressures (dynamic pressures), thereby holding the rotation shaft in a non-contact manner. Accordingly, the rotation shaft is supported in both the radial and axial directions by the foil bearings, which can suppress the reduction of the fatigue life of the bearings due to high-speed rotation and also can eliminate the necessity of providing the function of circulating lubricating oil, thereby enabling the reduction of the size of the compressed-air supplying device.

With the fuel-cell apparatus according to the present invention, compressed air which has been utilized for power generation in the fuel-cell stack is efficiently utilized, after the reaction therein, for rotating the rotation shaft of the compressor, which can reduce the power consumption of the compressor to increase the efficiency of the fuel-cell apparatus and also can reduce the output capacity of the compressor, thereby enabling size reduction and cost reduction.

### BRIEF DESCRIPTION OF THE DRAWINGS

Fig. 1 is a block diagram illustrating a fuel-cell apparatus employing a fuel-cell apparatus according to the present invention;
Fig. 2 is a longitudinal cross-sectional view schematically illustrating the fuel-cell apparatus according to the present invention;
Fig. 3 is a cross-sectional view illustrating a radial foil bearing for use in a fuel-cell compressed-air supplying device according to the present invention; and
Fig. 4 is views illustrating an axial foil bearing used in the fuel-cell compressed-air supplying device according to the present invention, wherein Fig. 4(a) is an enlarged longitudinal cross-sectional view and Fig. 4(b) is a cross-sectional view along a circumferential direction.

### DETAILED DESCRIPTION OF THE PREFERRED EMBODIMENT

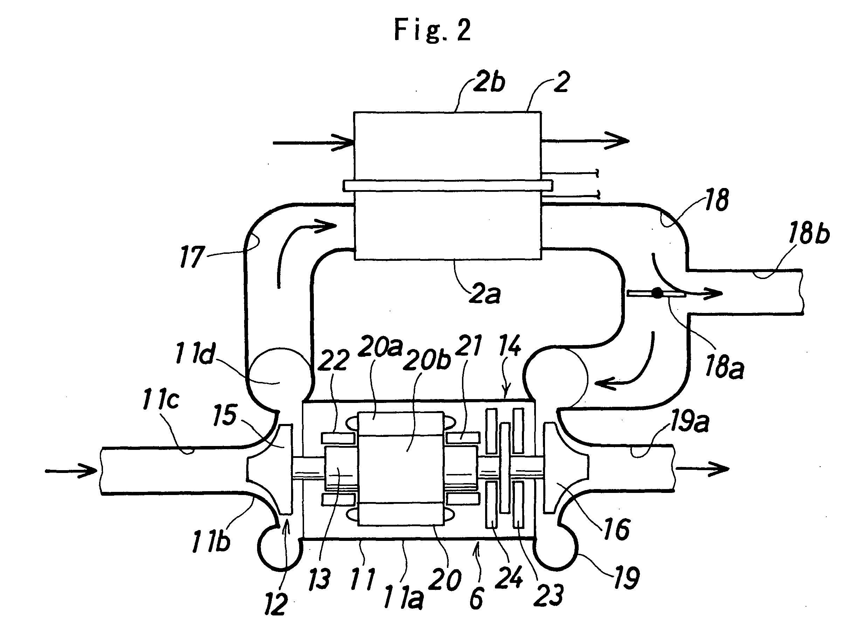

There will be described an embodiment of the present invention, with reference to the drawings. In the following description, the right and the left in Fig. 2 will be designated as front and back.

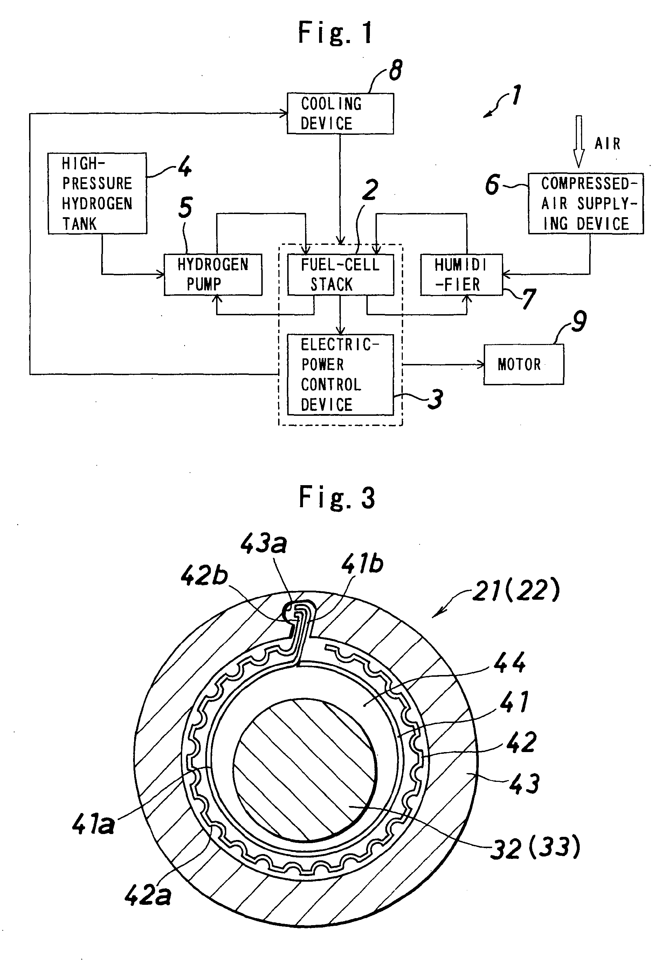

Fig. 1 is a block diagram of a fuel-cell apparatus according to the present invention which is mounted to a vehicle. The fuel-cell apparatus (1) includes a fuel-cell stack (2), an electric-power control device (3) which controls the electric power supplied from the fuel-cell stack (2), a high-pressure hydrogen tank (4) and a hydrogen pump (5) which supply hydrogen to the fuel-cell stack (2), a compressed-air supplying device (6) which supplies compressed air to the fuel-cell stack (2), a humidifier.(7) which humidifies the compressed air supplied from the compressed-air supplying device (6), and a cooling device (8) which cools the fuel-cell stack (2) and the electric-power control device (3), wherein a motor (9) for running the vehicle is driven by the electric energy provided from the fuel-cell stack (2).

As illustrated in Fig. 2, the fuel-cell compressed-air supplying device (6) includes a compressor (12) provided within a casing (11) and a bearing device (14) which supports a rotation shaft (13) of the compressor (12).

The casing (11) is constituted by a rotation-shaft supporting portion (11a) at the front side and a gas flow channel portion (11b) at the rear side. A gas inlet channel (11c) is provided at the rear end of the space within the gas flow channel portion (11b).

The compressor (12) is an electric turbo-type air compressor in which the rotation shaft (13) which is a horizontal shaft is rotated within the hermetic casing (11) having substantially a cylindrical shape which is placed along an anteroposterior and horizontal axis. Namely, there is provided an impeller (15) positioned in the space within the gas flow-channel portion (11b), at the rear end of the horizontal rotation shaft (13) placed in the space within the rotation-shaft supporting portion (11a). Further, there is provided a turbine (16) at the front end of the rotation shaft (13).

Inside the rotation-shaft supporting portion (11a), there are provided a built-in motor (20) for rotating the rotation shaft (13) at a high speed, a pair of front and rear radial foil bearings (21) and (22) which support the rotation shaft (13) in the radial direction, and a pair of front and rear axial foil bearings (23) and (24) which support the rotation shaft (13) in the axial direction (anteroposterior direction).

The motor (20) is constituted by a stator (20a) provided at the rotation-shaft supporting portion (11a) and a rotor (20b) provided at the rotation shaft (13).

The motor (20) causes the rotation shaft (13) to rotate, which causes the impeller (15) to rotate. Through the rotation of the impeller (15), air is flowed into the space (11d) in the gas flow-channel portion (11b) through the gas inlet channel (11c), then is compressed within the same space (11d) and is supplied to an oxygen-side electrode portion (2a) in the fuel-cell stack (2) through a compressed-air channel (17) which is communicated with the aforementioned space (11d). Hydrogen is supplied to a hydrogen-side electrode portion (2b) in the fuel-cell stack (2) and, thus, the fuel-cell stack (2) generates electric energy through chemical reaction between the hydrogen and the oxygen.

The exhaust air resulted from the reaction in the fuel-cell stack (2) is supplied through an exhaust air flow channel (18) to the turbine (16), which causes the turbine (16) to rotate. Thus, the energy which has been conventionally discarded can be efficiently utilized for rotating the rotation shaft (13) of the compressor (12). In the exhaust air flow channel (18), there is provided a flow-rate control valve (18a) which controls the flow rate of the exhaust air supplied to the turbine (16), according to the state of the rotation thereof.

The bearing device (14) is constituted by the front and rear radial foil bearings (21) and (22) and the front and rear axial foil bearings (23) and (24).

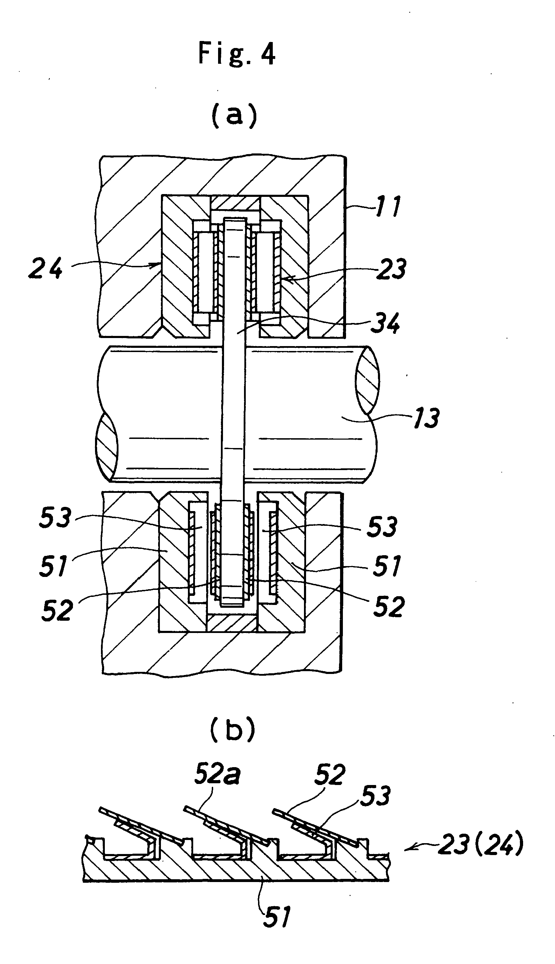

As illustrated in Fig. 3, each of the radial foil bearings (21) (22) is constituted by a flexible top foil (bearing foil) (41) placed radially outside of a larger diameter portion (32) (33) of the rotation-shaft with a bearing gap (44) interposed therebetween, a bump foil (elastic member) (42) placed radially outside of the top foil (41), and an outer ring (bearing housing) (43) placed radially outside of the bump foil (42).

The top foil (41) is made of a band-shaped stainless steel plate and is formed by rolling the band-shaped stainless steel plate into a cylindrical shape having opposite longitudinal ends adjacent to each other without circumferential overlapping, then cutting and bending, in the radial direction, the opposite axial end portions of one end portion of the cylindrically-shaped steel plate and then folding their tip ends. The cylindrical portion (41a) other than the cut-and-bent portions forms the main portion of the top foil, while the cut-and-bent portions (41b) form engagement portions of the top foil (41).

The bump foil (42) is constituted by a cylindrical portion (42a) made of a stainless-steel waveform plate member deformed into a cylindrical shape and an engagement portion (42b) which is continuous with one end of the cylindrical portion (42a) and is positioned radially outside of the cylindrical portion (42a).

An engagement groove (43a) extending substantially in the radial direction is formed in the inner peripheral surface of the outer ring (43). The cylindrical portion (42a) of the bump foil (42) is placed along the inner peripheral surface of the outer ring (43) and the engagement portion (42b) is engaged with the engagement groove (43a) of the outer ring (43) so that the bump foil (42) is mounted to the outer ring (43). Further, the cylindrical portion (41a) of the top foil (41) is interposed between the bump foil (42) and the rotation-shaft larger diameter portion (32) (33) and the engagement portion (41b) thereof is engaged with the engagement groove (43a) in the outer ring (43) so that the top foil (41) is mounted to the outer ring (43).

Since the top foil (41) is made of a band-shaped stainless steel plate rolled into a cylindrical shape having opposite longitudinal ends adjacent to each other without circumferential overlapping and, thus, has a constant radius of curvature and high roundness, the radial foil bearings (21) (22) have excellent performance for supporting of the rotation shaft (13) and excellent characteristics for floating the rotation shaft (13).

As illustrated in Fig. 4, each of the axial foil bearings (23) (24) is constituted by a bearing housing (51) secured to the casing (11), a bearing foil (52) constituted by plural flexible foil pieces (52a) which are circumferentially placed between the bearing housing (51) and a flange portion (34) of the rotation shaft (13) and secured at their one ends to the bearing housing (51), and an elastic member (53) placed between the bearing foil (52) and the bearing housing (51) for elastically supporting the bearing foil (52). The flange portion (34) of the rotation shaft (13) functions as a thrust plate which faces to the bearing housing (51) and rotates integrally with the rotation shaft (13) in the axial foil bearings (23) (24).

Further, although not illustrated, the radial foil bearings (21) (22) and the axial foil bearings (23) (24) are not limited to the aforementioned bearings, and the radial foil bearings may include a bearing foil constituted by plural flexible foil pieces each having a bearing surface faced to the rotation shaft (13) and a bearing housing for holding the bearing foil between the bearing housing and the rotation shaft (13), while the axial foil bearings may include a flexible top foil (bearing foil) having a bearing surface facing to the rotation-shaft flange portion (34), a bump foil (elastic member) for supporting the top foil and a bearing housing for holding the top foil and the bump foil between the bearing housing and the rotation-shaft flange portion (34).

With the aforementioned fuel-cell compressed-air supplying device (6), ambient air is drawn into the gaps between the bearing foils (41) and (52) of the foil bearings (21) (22) (23) (24) and the rotation shaft (13), during the rotation of the rotation shaft (13) of the compressor (12), to generate pressures (dynamic pressures), so that the rotation shaft (13) is supported by the foil bearings (21) (22) (23) (24) in both the radial and axial directions, in a non-contact manner, which can suppress the reduction of the fatigue life of the bearings (21) (22) (23) (24) due to high-speed rotation. Further, when the vehicle normally runs (the rotation shaft rotates at a high speed), the flow-rate control valve (18a) provided midway through the exhaust air flow channel (18) for supplying exhaust air to the turbine (16) is fully opened, which causes the exhaust air to be discharged from an exhaust port (19a) in the turbine housing (19) after rotating the turbine (16). This reduces the power consumption of the compressor (12), thereby increasing the rotation efficiency thereof. At a power-saving state such as a speed reduction state of the vehicle, the flow-rate control valve (18a) is partially or fully opened to discharge a portion or all of the exhaust air to the outside through an exhaust flow channel (18b) provided midway through the exhaust air flow channel (18) . This can improve the inertia of the turbine (16), thereby increasing the efficiency even at power-saving states.

## Claims

1. A fuel-cell apparatus comprising:
a fuel-cell stack; and
a fuel-cell compressed-air supplying device for compressing air and supplying the compressed air to the fuel-cell stack, wherein
the compressed-air supplying device includes a compressor including an impeller provided on one side of a rotation shaft and a turbine provided on the other side of the rotation shaft of the compressor, compressed air is supplied to the fuel-cell stack through the rotation of the impeller, and exhaust air exhausted from the fuel-cell stack causes the turbine to rotate.

2. The fuel-cell apparatus according to Claim 1, wherein
a bearing device which supports the rotation shaft of the compressor includes a pair of radial foil bearings provided coaxially with the rotation shaft for supporting the rotation shaft in the radial direction, and a pair of axial foil bearings faced to the rotation shaft in the axial direction for supporting the rotation shaft in the axial direction.

3. The fuel-cell apparatus according to Claim 1, wherein
a flow-rate control valve is provided in an exhaust air flow channel for supplying the air exhausted from the fuel-cell stack to the turbine, the flow-rate control valve being for controlling the flow rate of the exhaust air supplied to the turbine, according to a rotation state.

4. The fuel-cell apparatus according to Claim 3, wherein
during high-speed rotation of the rotation shaft, the valve is fully opened to cause the exhaust air to be discharged from an exhaust port in the turbine housing after rotating the turbine, and
in a power-saving state, the valve is partially or fully closed to cause a portion or all of the exhaust air to be discharged outside through midway of the exhaust air flow channel.
